# FASCICULE DE BREVET EUROPEEN

(11) **EP 4 091 918 B1**
(45) Date de publication et mention de la délivrance du brevet: **21.02.2024**
(21) Numéro de dépôt: 22173870.1
(22) Date de dépôt: 17.05.2022
(51) Int. Cl.: B62D 33/037, B60J 5/06

(54) **POIGNÉE DE FERMETURE, NOTAMMENT POUR RIDELLE**
VERSCHLUSSGRIFF, INSBESONDERE FÜR SEITENWÄNDE
HANDLE FOR CLOSING, IN PARTICULAR FOR SIDE PANEL

(30) Priorité: 20.05.2021 FR 2105290
(43) Date de publication de la demande: 23.11.2022
(73) Titulaire: Ur'ben, 12800 Naucelle (FR)
(72) Inventeur: AUREJAC, Mathieu, 12800 NAUCELLE (FR); CAVALLARI, Philippe, 81000 ALBI (FR); GAFFARD, Benjamin, 12000 RODEZ (FR)
(74) Mandataire: Plasseraud IP

(56) Documents cités:
- EP-A2- 1 553 248
- DE-A1-102009 014 329
- DE-U1-202013 104 526
- JP-U- S52 168 798

## Description

La présente divulgation concerne une poignée de fermeture et plus particulièrement une poignée de fermeture pour ridelle.

### Domaine technique

La présente divulgation est plus particulièrement destinée au domaine de la carrosserie industrielle, notamment pour équiper un ouvrant de benne. Toutefois, cette divulgation peut trouver des applications dans d'autres domaines dans lesquels il s'agit de réaliser un verrouillage d'un ouvrant par rapport à une structure fixe ou embarquée.

### Technique antérieure

Dans le domaine des bennes pour véhicule, on trouve généralement un fond, ou plateau, entouré de ridelles qui permettent de maintenir une charge disposée sur le fond, ou plateau. Pour faciliter le chargement et le déchargement de la benne, il est connu d'avoir au moins une ridelle pivotante. Cette ridelle pivote alors le long d'un bord du plateau facilitant ainsi l'accès à celui-ci. Pour le transport, il convient alors de fermer la ridelle et de la maintenir fermée. À cet effet, des verrous sont prévus et permettent de verrouiller la ridelle par rapport à des poteaux solidaires du plateau.

Il est par exemple connu d'avoir un verrou monté pivotant sur la ridelle et actionnable par une poignée. Le verrou vient alors coopérer avec une gâche aménagée dans un poteau solidaire du plateau. Le maintien en position verrouillée du verrou est assuré généralement par les forces de frottement (autour de l'axe et verrou dans la gâche) et/ou par gravité, la poignée étant ménagée de telle sorte qu'elle se trouve en position basse lorsque le verrou coopère avec la gâche. Ce maintien est généralement suffisant mais il peut arriver qu'avec l'usure et le temps les forces de frottements diminuent et que le verrou soit alors moins bien maintenu dans sa position verrouillée qu'à l'origine, c'est-à-dire qu'avec une ridelle neuve.

Un autre inconvénient est que la position ouverte du verrou n'est pas stable. En effet, comme indiqué précédemment, par action de la gravité, le verrou est rappelé habituellement en position fermée. Pour ouvrir une ridelle, il peut être un peu compliqué alors d'ouvrir la ridelle seul car les deux verrous ne sont pas manoeuvrables depuis une même position et le temps de se déplacer d'un verrou à l'autre, le premier verrou peut se refermer.

L'encombrement des poignées de l'art antérieur est également problématique. Ces poignées doivent, d'une part, être ergonomiques et donc laisser un espace suffisant entre la ridelle et la poignée pour permettre à l'utilisateur de passer sa main et bien pouvoir saisir la poignée et, d'autre part, ne pas être trop en saillie vers l'extérieur pour ne pas venir « pénaliser » la largeur hors tout du véhicule qui est limitée réglementairement. Un tel exemple est connu du DE 20 2013 104526 U1 qui divulgue les caractéristiques du préambule de la revendication 1.

La présente divulgation a pour but de remédier à ces problématiques. Elle a pour but d'améliorer la sécurité procurée par une poignée de fermeture sans, de préférence, pénaliser l'encombrement surtout pour une utilisation sur une carrosserie de véhicule.

### Résumé

Il est proposé une poignée de fermeture pour un ouvrant comportant un verrou, un axe de rotation pour le verrou et un manche permettant de commander la rotation du verrou autour de l'axe de rotation entre une position dite fermée et une position dite ouverte.

Selon la présente divulgation, cette poignée de fermeture comporte en outre une base supposée destinée à être fixe par rapport à l'ouvrant,
et est telle que :
le manche est en outre mobile en rotation autour d'un second axe perpendiculaire à l'axe de rotation, entre une position dite verrouillée et une position dite de libération,
le manche et la base comportent un jeu de butées tel que lorsque le manche est en position verrouillée et que le verrou est en position ouverte, respectivement fermée, une rotation du manche autour de l'axe de rotation pour amener le verrou en direction de sa position fermée, respectivement ouverte, n'est pas possible, ledit jeu de butées est tel que dans la position de libération la butée associée au manche est décalée par rapport à la butée associée à la base autorisant alors une rotation du manche autour de l'axe de rotation en entrainant le verrou, et le manche est précontraint élastiquement dans sa position dite verrouillée.

Ces moyens permettent de définir deux positions stables pour le verrou, l'une correspondant à la position fermée verrouillée et l'autre à une position ouverte verrouillée. De la sorte, lorsque l'élément à maintenir fermé est dans sa position fermée et que la poignée de fermeture est dans sa position de verrouillage, cette dernière étant stable, alors les vibrations ou autres contraintes subies et non maitrisées ne parviennent pas à ouvrir la poignée de fermeture qui reste alors en position verrouillée. De même, lorsque la poignée de fermeture est dans une position de déverrouillage, cette position étant stable, la poignée de fermeture n'est pas rappelée en position de verrouillage. Un utilisateur peut donc déverrouiller une poignée de fermeture à une extrémité d'une ridelle puis aller déverrouiller une autre poignée de fermeture à l'autre extrémité de la même ridelle sans risque de voir se refermer la première poignée de fermeture.

Dans une première forme de réalisation, il peut être prévu que le verrou et le manche soient d'une seule pièce.

Dans cette première forme de réalisation, on peut en outre prévoir que la base présente une forme circulaire présentant à sa périphérie deux zones formant chacune un logement en creux entre lesquelles se trouve une partie en saillie formant butée, et que le manche présente un doigt en saillie vers la base, la forme dudit doigt étant adaptée pour prendre place dans lesdits logements en creux.

Selon une deuxième forme de réalisation, il est proposé que :
le verrou est monté sur la base supposée fixe de manière à pouvoir tourner librement sur cette base autour de l'axe de rotation, le verrou étant positionné entre la base et le manche,
que la base présente une première saillie en direction du verrou et du manche,
que le manche comporte une deuxième saillie en direction de la base, le verrou présentant une forme permettant à ladite deuxième saillie de coopérer avec la première saillie,
que le manche est monté pivotant par rapport au verrou selon le second axe,
que dans la position verrouillée la deuxième saillie vient en butée contre la première saillie et dans la position dite position de libération la première saillie ne vient pas empêcher un mouvement de rotation du manche autour de l'axe de rotation.

Dans cette deuxième forme de réalisation, le verrou et le manche peuvent se déplacer indépendamment l'un de l'autre dans certaines conditions.

Les caractéristiques exposées dans les paragraphes suivants peuvent, optionnellement, être mises en oeuvre pour la deuxième forme de réalisation. Elles peuvent être mises en oeuvre indépendamment les unes des autres ou en combinaison les unes avec les autres :

- le verrou comporte, d'une part, une partie centrale avec un trou central permettant le passage de l'axe de rotation ainsi qu'une encoche périphérique permettant à la deuxième saillie du manche de se déplacer lorsque le manche pivote autour de son axe de pivotement, et, d'autre part, un bras en forme de crochet s'étendant à partir de la partie centrale ;

- le verrou présente une première zone sphérique, et le manche présente une seconde zone sphérique coopérant avec la première zone sphérique de manière à permettre le pivotement du manche sur le verrou ;

- le verrou comporte une troisième saillie et une quatrième saillie s'étendant en direction de la platine, lesdites saillies coopérant avec la première saillie de manière à limiter le mouvement de rotation du verrou par rapport à la platine autour de l'axe de rotation ;

- les moyens de rappel comportent un ressort hélicoïdal prenant appui, d'une part, dans un logement ménagé dans le verrou, faisant face au manche et disposé de manière sensiblement diamétralement opposée à la forme du verrou destinée à laisser la deuxième saillie du manche coopérer avec la première saillie de la platine par rapport à l'axe de rotation et, d'autre part, dans un logement ménagé dans le manche et disposé de manière sensiblement diamétralement opposée à la deuxième saillie du manche par rapport à l'axe de rotation.

Selon un autre aspect, il est proposé une ridelle, caractérisée en ce qu'elle comporte au moins une poignée de fermeture telle que décrite ci-dessus.

On peut en outre prévoir pour une telle ridelle qu'elle comporte une partie profilée montée entre deux pièces d'extrémité, chaque pièce d'extrémité comportant une équerre avec une première branche faisant face à une section d'extrémité de la partie profilée et une seconde branche destinée à servir de butée coopérant avec un poteau,
que la première branche comporte une lumière permettant le passage d'au moins une partie du verrou, et
que la poignée de fermeture est montée sur la partie profilée de telle sorte que le verrou puisse pivoter de manière qu'une partie du verrou puisse passer à travers ladite lumière.

En variante ou en complément, une ridelle définie ci-dessus peut aussi être telle que la partie profilée comporte au moins une zone sensiblement plane inclinée par rapport à la seconde branche de l'équerre ; que la poignée de fermeture est montée sur ladite zone sensiblement plane, et que le manche, dans une position engagée, s'étend sensiblement parallèlement à la seconde branche de l'équerre.

Selon un autre aspect, il est aussi proposé une pièce de carrosserie, de type benne ou plateau, caractérisée en ce qu'elle comporte une ridelle telle que définie précédemment.

Enfin, un autre aspect de la présente divulgation concerne un véhicule, caractérisé en ce qu'il comporte une pièce de carrosserie telle que décrite au paragraphe précédent.

### Brève description des dessins

D'autres caractéristiques, détails et avantages apparaîtront à la lecture de la description détaillée ci-après, et à l'analyse des dessins annexés, sur lesquels :
**Fig. 1**

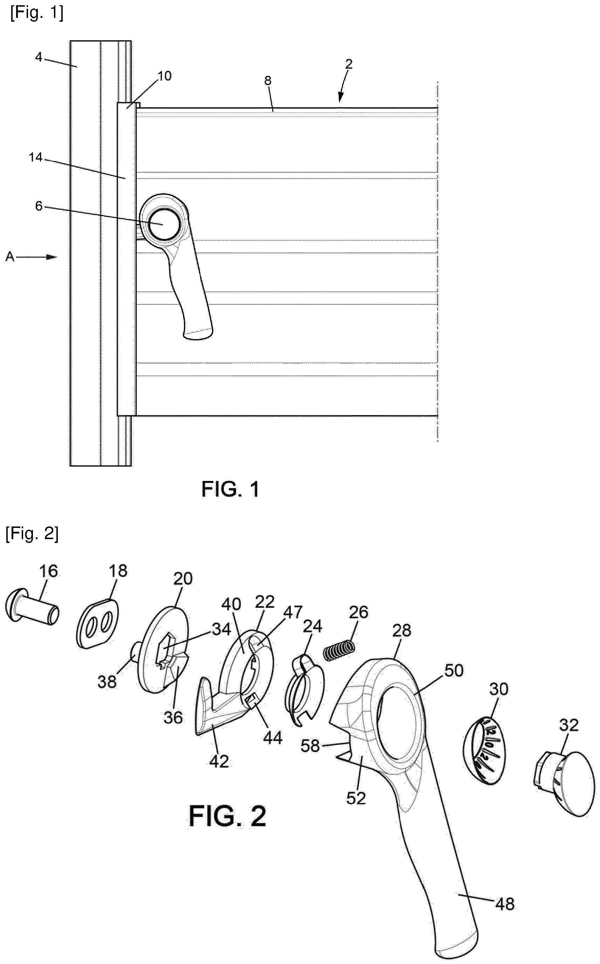

   [Fig. 1] montre une poignée de fermeture selon un mode de réalisation montée sur une ridelle coopérant avec un poteau.
**Fig. 2**
   [Fig. 2] montre une première vue éclatée de la poignée de fermeture de la figure 1.
**Fig. 3**

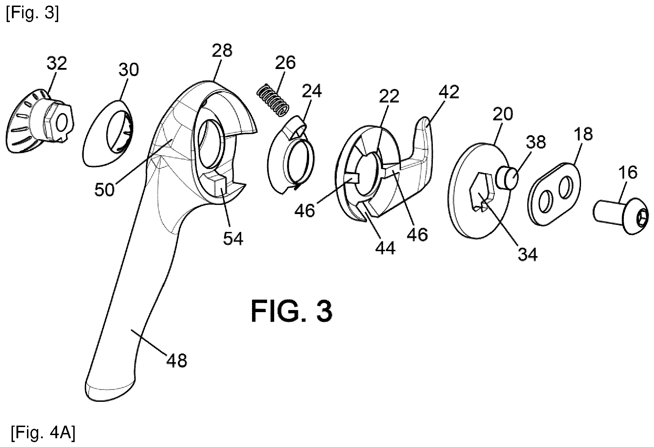

   [Fig. 3] montre une autre vue éclatée de la poignée de fermeture de la figure 1.
**Fig. 4**

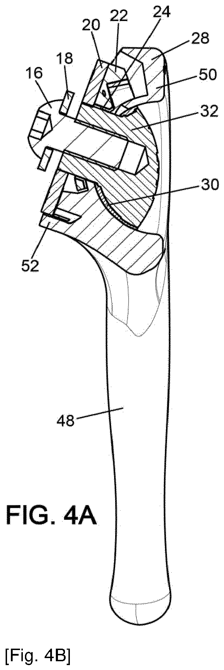

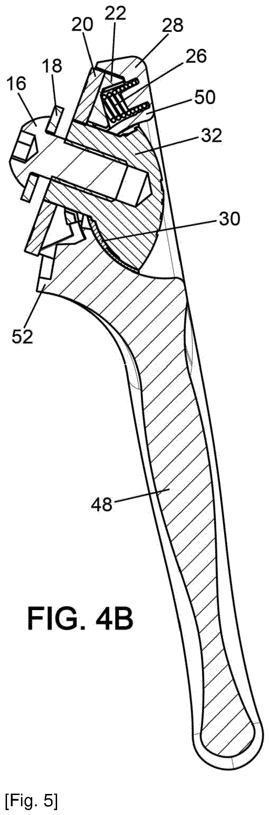

   Fig. 4 est une vue en coupe longitudinale de la poignée de fermeture des figures précédentes : [Fig. 4A] montre la poignée dans la position fermée verrouillée tandis que [Fig. 4B] montre la poignée dans une position fermée déverrouillée ou de libération.
**Fig. 5**

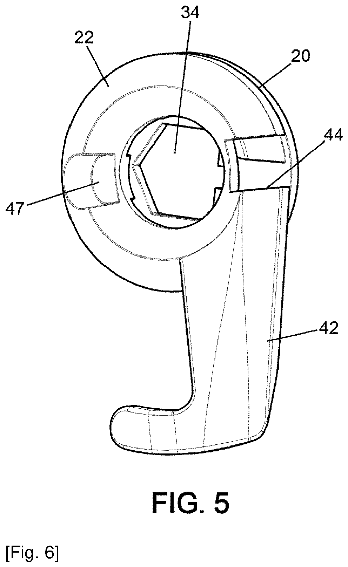

   [Fig. 5] montre à échelle agrandie un verrou et une platine de la poignée de fermeture des figures précédentes.
**Fig. 6**

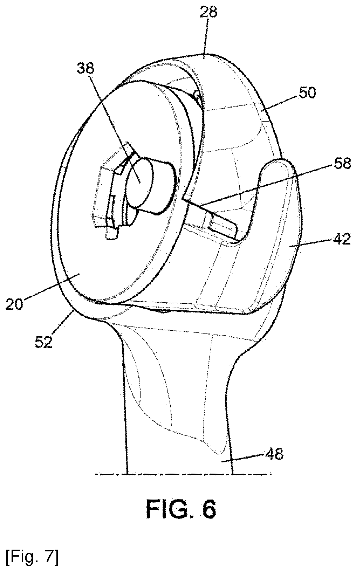

   [Fig. 6] montre à échelle agrandie un verrou, une platine et un manche de la poignée des figures 1 à 4.
**Fig. 7**

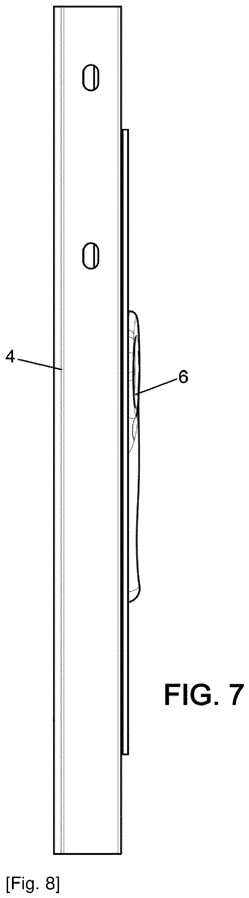

   [Fig. 7] est une vue de la figure 1 selon la flèche A.
**Fig. 8**

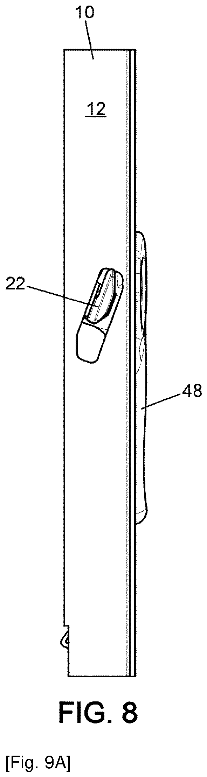

   [Fig. 8] est une vue similaire à la figure 7 avec retrait d'un poteau.
**Fig. 9**

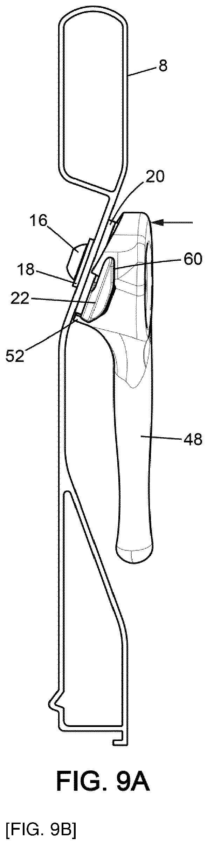

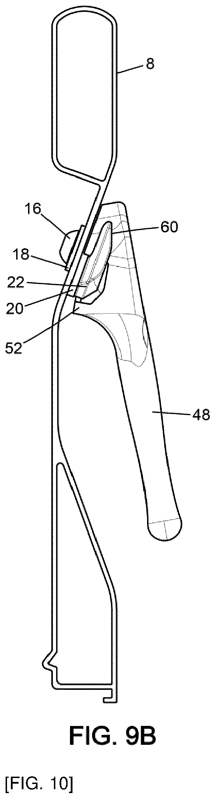

   [Fig. 9] est une vue similaire à la figure 8 avec retrait d'une pièce d'extrémité : [Fig. 9A] montre la poignée dans la position fermée verrouillée tandis que [Fig. 9B] montre la poignée dans une position fermée de libération.
**Fig. 10**

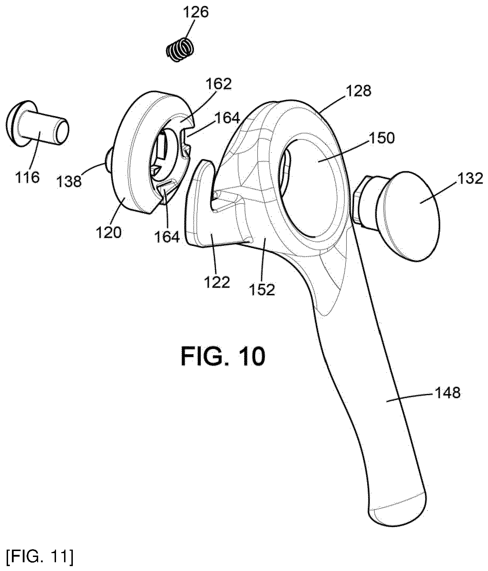

   [Fig. 10] est une vue similaire à la figure 2 pour une variante de réalisation d'une poignée de fermeture.
**Fig. 11**

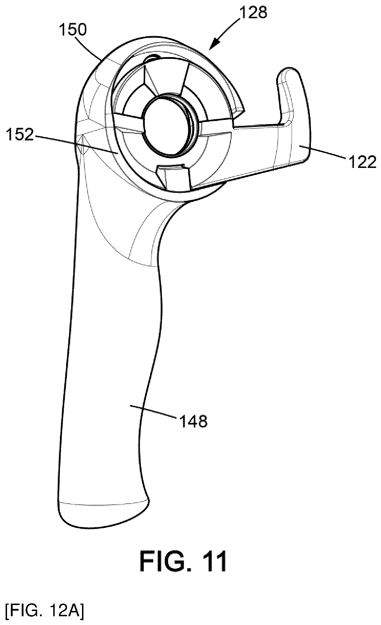

   [Fig. 11] illustre en perspective le manche et le verrou de la figure 10 vus sous un autre angle.
**Fig. 12**

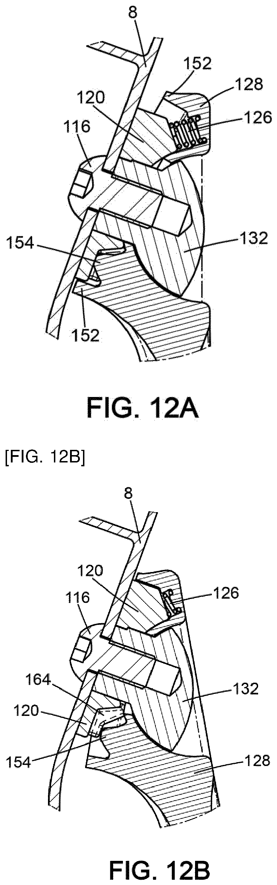

   [Fig. 12] est une vue en coupe longitudinale de la poignée de fermeture de la figure 10 assemblée : [Fig. 12A] montre la poignée dans la position fermée verrouillée tandis que [Fig. 12B] montre la poignée dans une position fermée déverrouillée ou de libération.

### Description des modes de réalisation

Il est maintenant fait référence à la figure 1. Sur cette figure, l'homme du métier de la carrosserie industrielle reconnaît une partie d'une ridelle 2 d'une benne ou d'un plateau de véhicule dit véhicule utilitaire. Cette ridelle 2 coopère avec un poteau 4 et une poignée de fermeture 6 permet de rendre la ridelle 2 solidaire du poteau 4 ou bien de libérer la ridelle 2 du poteau 4.

La ridelle 2 comporte une pièce profilée 8 qui porte à chacune de ses extrémités une pièce d'extrémité 10.

La pièce profilée 8 présente une forme globale de planche et est destinée à maintenir dans une benne (ou plateau) correspondante les différents objets qui y sont placés pour un transport. La ridelle 2 est montée pivotante autour d'un bord d'un fond de la benne (ou du plateau). Cette structure correspond à une structure classique pour une ridelle.

De même, il est classique de monter la pièce profilée dans un cadre ou bien, dans une forme de réalisation simplifiée, de munir chaque section d'extrémité de la pièce profilée 8 d'une pièce d'extrémité comme ici la pièce d'extrémité 10. Cette dernière a une double fonction : fermer la pièce profilée 8 et servir de butée pour limiter le mouvement pivotant de la ridelle par rapport au fond de la benne (ou plateau). Pour remplir cette double fonction, la pièce d'extrémité 10 comprend une équerre avec une première branche 12 qui se présente sous la forme d'une plaque venant fermer une extrémité de la pièce profilée 8 et avec une seconde branche 14 qui s'étend perpendiculairement à la première branche 12. La première branche 12 est notamment visible sur la figure 8 et la seconde branche 14 est notamment visible sur la figure 1.

La seconde branche 14 est destinée à venir en appui contre le poteau 4 lorsque la ridelle 2 est en position fermée et la poignée de fermeture 6 a pour fonction de maintenir la ridelle 2 dans sa position fermée. La figure 1 montre une extrémité de ridelle 2. Comme le sait l'homme du métier, la ridelle 2 présente une autre extrémité symétrique à l'extrémité représentée avec une autre pièce d'extrémité et une autre poignée de fermeture en vue de coopérer avec un autre poteau.

La présente divulgation concerne plus particulièrement la poignée de fermeture 6 illustrée sur la figure 1. Cette poignée de fermeture 6 comporte un ensemble d'éléments qui sont représentés en vue perspective éclatée selon deux angles de vue différents sur les figures 2 et 3. Comme on peut le voir sur ces figures, la poignée de fermeture 6 comporte : une vis 16, une rondelle 18, une platine 20, un verrou 22, une première interface 24, un ressort 26, un manche 28, une seconde interface 30 et une tête taraudée 32.

La poignée de fermeture 6, comme illustré au dessin, vient se fixer sur la pièce profilée 8 de la ridelle. La vis 16 vient traverser cette pièce profilée 8 et forme un boulon avec la tête taraudée 32. Ce « boulon » sert également d'axe de rotation pour le verrou 22 et le manche 28 comme il va ressortir de la description qui suit. La vis 16 (en partie seulement) et la rondelle 18 sont destinées à se trouver d'un côté de la pièce profilée 8 tandis que les autres éléments se trouvent de l'autre côté de la pièce profilée 8.

La vis 16 est ici une vis à tête ronde et elle participe de manière classique à un assemblage d'éléments. Sa tête vient prendre appui sur la rondelle 18, elle même en appui sur une face de la ridelle 2.

La platine 20 est destinée à servir de base au mécanisme permettant de réaliser un verrouillage de la ridelle 2 par rapport au poteau 4. Elle vient s'appuyer sur la pièce profilée 8 de la ridelle 2 en vis-à-vis de la rondelle 18.

La platine 20 se présente sous la forme d'un disque au centre duquel est réalisée une fenêtre 34, sur une face duquel est réalisée une première butée 36 et sur l'autre face duquel se trouve un pion anti-rotation 38. La face du disque avec le pion anti-rotation 38 vient reposer sur la pièce profilée 8 dans laquelle un trou traversant permet le passage dudit pion anti-rotation 38. Ce dernier vient aussi se loger dans un alésage prévu à cet effet dans la rondelle 18. Ainsi, comme illustré au dessin, la rondelle 18 présente une forme oblongue avec deux alésages circulaires : un premier alésage pour permettre le passage de la vis 16, et plus précisément de sa tige, et un second alésage servant de logement au pion anti-rotation 38. De la sorte, les efforts mécaniques à absorber pour empêcher la platine 20 de pivoter autour de l'axe de rotation formé en partie par la vis 16 sont absorbés par la rondelle 18, réalisée par exemple en acier, et non par la pièce profilée 8 qui peut être par exemple en alliage à base d'aluminium. Ainsi, la platine 20 est destinée à être montée sur la ridelle 2 en étant solidaire de celle-ci. En fin de montage de l'ensemble de la poignée, la platine 20 est fixe par rapport à la ridelle 2 et sa pièce profilée 8.

La fenêtre 34 est réalisée au centre du disque de la platine 20. Sa forme n'est pas une forme de révolution de manière à pouvoir servir de logement à une pièce présentant une forme complémentaire sans avoir de possibilité de rotation autour de l'axe de rotation formé par la vis 16 et la tête taraudée. Comme illustré sur le dessin, l'homme du métier remarque de suite qu'une extrémité de la tête taraudée 32 présente une forme complémentaire à celle de la fenêtre 34 si bien que lorsque la tête taraudée 32 est assemblée à la vis 16, ces deux pièces forment un axe de rotation (pour le verrou 22 et le manche 28) fixe par rapport à la platine 20 (et la ridelle 2).

La première butée 36 vient en saillie sur la face opposée du disque portant le pion anti-rotation 38. Cette butée est réalisée à proximité de la périphérie. Elle présente à sa périphérie une surface conique de même axe que l'axe de révolution du disque. Elle comporte en outre deux surfaces latérales qui correspondent à des faces radiales, c'est-à-dire qu'elles se trouvent dans un plan contenant l'axe de révolution du disque. Il s'agit ici de caractéristiques avantageuses de la première butée 36 qui correspondent à la forme de réalisation illustrée au dessin mais ces formes de la première butée 36 ne sont pas limitatives.

Le verrou 22 est formé d'une partie centrale 40 et d'un bras 42 en forme de crochet.

La partie centrale 40 du verrou 22 présente une forme annulaire dont le diamètre extérieur correspond au diamètre du disque de la platine 20 (cf. figures 5 et 6). Une encoche radiale 44 est réalisée à la périphérie de la partie centrale 40.

La face de la partie centrale 40 orientée du côté de la platine 20 est réalisée en creux, de manière notamment à pouvoir loger la première butée 36. L'enveloppe de l'espace en creux est avantageusement de forme conique, et de préférence d'une forme conique correspondant à la surface périphérique de la première butée 36.

À l'intérieur de cet espace en creux, se trouve deux deuxièmes butées 46 destinées à coopérer avec la première butée 36 pour limiter le mouvement de rotation relatif entre le verrou 22 (considéré comme mobile) et la platine 20 (considérée comme fixe) comme il sera expliqué plus loin.

L'autre face de la partie centrale 40 présente une surface en forme de cuvette, de préférence sphérique. Cette cuvette présente également l'axe de rotation comme axe de révolution. On remarque en outre sur cette autre face de la partie centrale la présence d'un logement 47 en creux. Ce dernier est disposé diamétralement opposé à l'encoche radiale 44 et est prévu pour recevoir une extrémité du ressort 26.

Le manche 28 comporte une partie de commande 48 et une partie d'entrainement 50.

La partie de commande 48 se présente comme un levier avec une forme allongée et une taille adaptée à la forme d'une main d'un utilisateur. Sa forme allongée est de section légèrement aplatie par rapport à une section circulaire et variable longitudinalement de manière à être ergonomique. Cette forme répond essentiellement à des critères esthétiques et ergonomiques. Elle est assimilable à une partie sensiblement cylindrique.

La partie d'entrainement 50 ne forme qu'une seule pièce avec la partie de commande 48 et se trouve sensiblement dans le prolongement de cette dernière, avec un léger décalage latéral éventuel (comme illustré dans la forme de réalisation du dessin). Cette partie d'entrainement 50 présente une forme globalement annulaire autour d'un trou central légèrement oblong. Ce trou oblong est entouré d'une partie sphérique qui correspond à la partie sphérique du verrou 22. Du côté convexe de cette partie sphérique du manche 28, à distance de cette partie sphérique, se trouve une jupe périphérique 52 définissant un logement destiné à recevoir notamment la partie centrale 40 du verrou 22 et en grande partie la platine 20.

À l'intérieur de la jupe périphérique 52 se trouve une troisième butée 54 qui vient en saillie à l'intérieur de la jupe périphérique 52. Cette troisième butée 54 est destinée à se loger dans l'encoche radiale 44 du verrou 22 de telle sorte qu'une rotation du manche 28 autour de l'axe de rotation (vis 16 et tête taraudée 32) entraine la rotation du verrou 22 autour de ce même axe de rotation.

À l'opposé de cette troisième butée 54 se trouve un logement cylindrique 56 avec un pion central pour recevoir une autre extrémité du ressort 26.

La jupe périphérique 52 présente en outre une découpe 58 pour permettre au bras 42 de s'étendre. Cette découpe 58, visible sur la figure 6 peut aussi participer à l'entrainement en rotation du verrou 22.

On remarque sur le dessin, qui correspond à une forme de réalisation préférée non limitative, que le trou oblong de la partie d'entrainement 50 du manche 28 est orienté selon un axe longitudinal sur lequel se trouvent la troisième butée 54 et le logement cylindrique 56. Cet axe longitudinal est parallèle à l'axe de la partie de commande 48.

Le bord libre de la jupe périphérique 52 se trouve dans deux plans distincts. Du côté de la partie de commande 48, le bord libre de la jupe périphérique 52 se trouve dans un premier plan sensiblement parallèle à la partie de commande 48 (en assimilant cette partie à une partie allongée le long d'un axe) tandis que du côté opposé à la partie de commande, le bord libre de la jupe périphérique 52 est dans un second plan incliné par rapport au premier plan. La hauteur de la jupe périphérique 52 est moindre à l'opposé de la partie de commande 48 que du côté de la partie de commande 48.

Comme illustré sur les figures 2 et 3, la première interface 24 vient se placer entre le verrou 22 et le manche 28 tandis que la seconde interface 30 vient prendre place entre le manche et la tête taraudée 32. Ces interfaces sont disposées entre des pièces qui bougent l'une par rapport à l'autre. Leurs formes sont adaptées aux formes des pièces entre lesquelles elles sont placées. Elles présentent chacune une partie de forme sphérique.

Comme il ressort des figures 2 et 3, ainsi que de la vue en coupe 4, on a un empilage, dans cet ordre de : la rondelle 18, la pièce profilée 8 qui forme le support de la poignée de fermeture 6, la platine 20, le verrou 22, la première interface 24, le manche 28 et la seconde interface 30, le ressort étant disposé entre la première interface 24 et le manche 28, d'une part, et la vis 16 coopérant avec la tête taraudée 32 pour maintenir tous ces éléments assemblés.

Le fonctionnement de la poignée de fermeture 6 est alors celui décrit ci-après.

On suppose ici que la poignée de fermeture 6 est en position fermée, c'est-à-dire que la ridelle 2 est verrouillée par rapport au poteau 4 (figures 1 et 7 à 9). Le bras 42 du verrou 22 traverse la pièce d'extrémité 10 correspondante en passant à travers une fente (visible sur la figure 8) et en venant se loger dans le poteau 4. Le bras 42 à la manière d'un pêne vient ainsi verrouiller la ridelle par rapport au poteau 4.

Dans cette position de fermeture, l'extrémité libre du bras 42 du verrou 22 vient avantageusement en appui sur une surface intérieure du poteau 4. On a vu que la pièce d'extrémité 10 et le poteau 4 présentaient chacun une fente pour permettre le passage de ce bras. Les figures 9A et 9B (qui correspondent respectivement aux figures 4A et 4B) montrent que l'extrémité libre du bras 42 du verrou 22 présente une surface 60 qui est dans un plan sensiblement vertical, c'est-à-dire ici sensiblement parallèle à une face intérieure du poteau 4. Entre la figure 9A et la figure 9B, la poignée de fermeture est passée, d'une part, de sa position verrouillée où elle ne peut pas pivoter autour de son axe de rotation de manière à faire coopérer le verrou 22 avec le poteau 4 pour fermer ou ouvrir la ridelle 2, à sa position de libération permettant ce mouvement d'ouverture/fermeture, et, d'autre part, la poignée de fermeture a pivoté de quelques degrés autour de son axe de rotation formé notamment par la vis 16. On remarque que la surface 60, pour passer de la position de la figure 9A à la position de la figure 9B, se déplace, d'une part, de gauche à droite et, d'autre part, de bas en haut. Ce mouvement de la surface 60 qui vient coopérer avec une face intérieure du poteau 4, permet de réaliser un serrage lors de la fermeture de la ridelle. En tournant plus ou moins la poignée de fermeture 6, il est possible de réaliser progressivement un serrage plus ou moins important du verrou 22 par rapport au poteau 4. Ce serrage contribue lui aussi au maintien de la poignée de fermeture dans sa position fermée.

Comme on peut le voir notamment sur les figures 6 et 9A, la poignée de fermeture 6 est montée sur la ridelle 2 de manière à limiter son encombrement. La figure 9A montre la section de la pièce profilée 8. Dans la forme de réalisation illustrée, la pièce profilée 8 utilisée pour réaliser la ridelle 2 comporte une face inclinée par rapport à la seconde branche 14 de la pièce d'extrémité 10. Autrement dit, lorsque la ridelle 2 est montée sur un véhicule se trouvant sur un sol plan et horizontal et que la ridelle 2 est en position fermée, la pièce profilée 8 s'étend (par rapport au profilage) horizontalement et les pièces d'extrémités 10 s'étendent quant à elles verticalement. Ici, la pièce profilée 8 présente une zone dans laquelle sa paroi n'est pas verticale mais inclinée (d'environ 20°, par exemple entre 5 et 45°) par rapport à la verticale. Comme on peut le voir sur les figures 7 à 9, cette inclinaison est mise à profit pour encastrer la poignée de fermeture 6 et (figure 7) ainsi ladite poignée ne fait que très peu saillie de la ridelle et n'impacte que très légèrement la largeur hors tout de la benne ou du plateau.

Sur la figure 9A, on remarque que dans la position de verrouillage de la poignée, la partie de commande 48 du manche 28 reste accessible et préhensible. Toutefois, dans une autre configuration dans laquelle la préhension du manche 28 serait moins aisée, il est aussi possible de venir dégager la partie de commande du manche en appuyant sur la partie d'entrainement 50 du manche comme suggéré par la flèche sur la figure 9A.

Pour, à partir de cette position fermée (le verrou 22 est engagé dans le poteau 4 et empêche l'ouverture de la ridelle 2) et verrouillée (la poignée de fermeture 6 ne peut pas tourner autour de son axe de rotation), réaliser une ouverture de la ridelle 2, il convient de faire sortir entièrement le bras 42 du verrou 22 hors du poteau 4. Cette sortie est réalisée par un pivotement du verrou 22 autour de l'axe de rotation (vis 16 et tête taraudée 32). Toutefois, à partir de cette position, une simple rotation n'est pas possible car la troisième butée 54 (dans le manche 28) se trouve contre la première butée 36 (sur la platine 20). Il convient alors de faire pivoter le manche 28 autour d'un axe perpendiculaire à un plan contenant l'axe de rotation. Pour des questions d'ergonomie, il est choisi de faire pivoter autour d'un axe perpendiculaire au plan contenant l'axe de rotation et parallèle à la direction de la partie de commande 48. Ceci permet d'avoir un mouvement « naturel ».

En faisant référence à la figure 9A, dans la position au repos et de verrouillage qui est illustrée ici, le bord libre de la jupe périphérique 52 se trouvant du côté de la partie de commande 48 vient reposer sur la pièce profilée 8. Le manche 28 vient ici pivoter autour d'un axe perpendiculaire au plan de la figure de telle sorte que la partie de commande 48 s'éloigne de la pièce profilée 8 pour arriver dans une position illustrée sur la figure 9B. Ce mouvement de pivotement peut être réalisé soit en saisissant la partie de commande 48 pour la faire pivoter soit en appuyant sur la partie d'entrainement 50 du manche 28 comme suggéré par la flèche de la figure 9A. Ce mouvement de pivotement est limité par la jupe périphérique 52, jusqu'à ce que le bord libre de ladite jupe vienne reposer sur la pièce profilée 8 du côté opposé à la partie de commande 48. Dans ce mouvement, la troisième butée 54 (du manche 28) vient échapper à la première butée 36 (de la platine 20) et une rotation autour de l'axe de rotation (vis 16 et tête taraudée 32) devient possible. Au cours du pivotement du manche, on remarque aussi que le ressort 26 est mis sous contrainte (figure 4B).

La taille de la première butée 36 est adaptée à la configuration de telle sorte que lorsque la troisième butée 54 se trouve de l'autre côté de la première butée 36 (par rapport à la position de fermeture considérée ici comme la position de départ) le bras 42 du verrou 22 est entièrement sorti du poteau 4 et également de la pièce d'extrémité 10 correspondante, de manière à être entièrement visible par l'utilisateur. Dans cette position, le manche 28 peut pivoter en sens inverse et se rapprocher à nouveau de la pièce profilée 8. Le ressort 26 se détend alors. Cette position est également, comme la position de départ de la figure 9, une position stable.

Les deuxièmes butées 46 du verrou 22 viennent limiter le mouvement de rotation du verrou 22 sur la platine 20 (rotation autour de l'axe de rotation). Elles empêchent ainsi de poursuivre la rotation du verrou 22 pour l'une dans le sens d'un verrouillage et pour l'autre dans le sens d'un déverrouillage. Ces deuxièmes butées 46 coopèrent alors avec la première butée 36.

Les figues 10 et 12 illustrent une variante de réalisation simplifiée d'une poignée de fermeture selon la présente divulgation. Cette poignée de fermeture peut être utilisée dans le même contexte que la poignée de fermeture décrite ci-dessus et les figures 1, 7 et 9 correspondent aussi à cette version de réalisation simplifiée.

La figure 10 est une vue en perspective éclatée de la variante simplifiée de cette poignée de fermeture. On remarque par comparaison aux figures 2 et 3 que le nombre de pièces est limité. On retrouve ici une vis 116 et une tête taraudée 132. On a en outre une base 120, un ensemble manche-verrou 128 monobloc ainsi qu'un ressort 126 destiné à venir entre la base 120 et l'ensemble manche-verrou 128.

La vis 116 et la tête taraudée 132 sont similaires à la vis 16 et à la tête taraudée 32 respectivement décrites plus haut et ne sont pas à nouveau décrites ici. Elles forment ici aussi un axe de rotation pour l'ensemble manche-verrou 128.

La base 120 sert de support et de guidage pour l'ensemble manche-verrou 128 monobloc. Elle vient s'appuyer sur la pièce profilée 8 de la ridelle 2.

La base 120 se présente sous la forme d'une pièce annulaire dont le centre évidé permet le passage de la vis 116 et de la tête taraudée 132. Ce centre évidé présente de préférence au moins localement une forme qui n'est pas une forme de révolution pour coopérer avec l'extrémité de la tête taraudée 132 qui présente une forme complémentaire à cette forme qui n'est pas de révolution.

La face de la base 120 destinée à venir en appui sur la pièce profilée 8 de la ridelle 2 est sensiblement plane et comporte juste un pion anti-rotation 138 pour maintenir la base 120 fixe par rapport à la pièce profilée 8 de la ridelle 2 lorsque l'ensemble manche-verrou 128 pivote autour de son axe de rotation.

La face de la base 120 orientée vers l'ensemble manche-verrou 128 présente une zone sphérique 162 concave formant un anneau autour de l'axe de rotation servant de surface de contact et de guidage avec l'ensemble manche-verrou 128.

Cette base 120 comporte en outre deux logements 164 espacés angulairement d'environ 90°, c'est-à-dire environ la course angulaire souhaitée pour l'ensemble manche-verrou 128 comme il ressortira de l'explication qui suit. Entre ces deux logements 164 réalisés en creux se trouve une partie en saillie 136 comparable à la première butée 36 décrite plus haut.

L'ensemble manche-verrou 128 est une pièce monobloc et comporte une partie de commande 148, une partie d'entrainement 150 et un verrou 122.

La partie de commande 148 est similaire à la partie de commande 48 décrite en référence à la première forme de réalisation. La partie d'entrainement 150 se trouve dans le prolongement de la partie de commande 148 avec un léger décalage latéral. Elle présente une forme globalement annulaire autour d'un trou central légèrement oblong. Autour de ce trou central se trouve une partie sphérique convexe qui correspond à la zone sphérique 162 concave de la base 120. De même que la partie d'entrainement 50 décrite en référence au premier mode de réalisation, on retrouve ici une jupe périphérique 152 dont la forme est sensiblement similaire à la jupe périphérique 52 décrite plus haut, mis à part qu'elle ne présente pas de découpe (58) puisque le verrou est intégré d'une seule pièce à l'ensemble manche-verrou 128. Cette jupe périphérique 152 présente ainsi notamment un bord libre qui se trouve dans deux plans distincts comme expliqué en référence à la jupe périphérique 52.

Le verrou 122 est limité ici à une partie en forme de crochet qui s'étend vers l'extérieur à partir de la jupe périphérique 52.

À l'intérieur de la jupe périphérique 152 se trouve une butée 154 en saillie dont la forme est adaptée à la forme des logements 164.

Le fonctionnement de cette poignée de fermeture est similaire à celui décrit plus haut en référence aux figures 1 à 9.

La base 120 est montée fixe par rapport à la ridelle à laquelle elle est associée. La vis 116 et la tête taraudée 132 définissent un axe de rotation autour duquel le verrou 122 peut pivoter entre une position fermée et une position ouverte. En position fermée, le verrou 122 est en prise avec le poteau 4 de telle sorte que la ridelle (mobile par rapport à la carrosserie) est reliée au poteau 4 (fixe par rapport à la carrosserie). En position ouverte, le verrou 122 n'interagit plus avec le poteau 4.

L'ensemble manche-verrou 128 est en outre mobile en rotation autour d'un second axe perpendiculaire à l'axe de rotation défini précédemment. Ce second axe peut être défini par la ligne d'intersection entre les deux plans qui contiennent le bord libre de la jupe périphérique 152 (ceci est valable aussi pour la première forme de réalisation). L'ensemble manche-verrou 128 peut ainsi pivoter (en l'absence d'obstacle bien sûr) entre une position verrouillée et une position de libération. La position verrouillée correspond à une position dans laquelle une rotation du verrou autour de l'axe de rotation n'est pas possible. Cette position correspond à l'engagement de la butée 154 dans un logement 164. La position de libération correspond à une position autorisant la rotation de l'ensemble manche-verrou 128 autour de l'axe de rotation. Dans ce cas, la butée 154 passe « au-dessus » de la partie en saillie 136 se trouvant entre les deux logements 164. On remarque alors que la course angulaire du verrou 122 est définie par la position des logements 164. Le ressort 126 est disposé entre la base 120 et l'ensemble manche-verrou 128 de manière à précontraindre la partie de commande 148, et plus généralement l'ensemble manche-verrou 128, dans la position verrouillée. De la sorte, les positions de la poignée de fermeture quand la butée 154 se trouve dans l'un des logements 164 sont des positions stables.

### Application industrielle

Les présentes solutions techniques et ses variantes peuvent trouver à s'appliquer notamment pour la fermeture d'une ridelle sur une benne ou un plateau. Toutefois, d'autres applications sur un véhicule (fermeture d'un coffre par exemple) ou bien des applications non embarquées dans le domaine par exemple de la menuiserie, notamment menuiserie métallique, peuvent également être envisagées.

La présente divulgation propose ainsi l'ajout d'un mouvement supplémentaire à la poignée de fermeture, notamment son manche, qui, à lui seul, permet de désengager une sécurité qui a été introduite dans ladite poignée (notamment par un système de butées coopérant les unes avec les autres) et de procurer de la place pour la main de l'utilisateur et tout cela en rendant le système plus compact.

Ce mouvement supplémentaire est un mouvement vers l'extérieur de l'ensemble sur lequel la poignée de fermeture est montée, par exemple une carrosserie de véhicule dit véhicule utilitaire. Quand l'utilisateur a mis le manche de ladite poignée dans une position prédéterminée, il peut alors réaliser un mouvement de rotation d'ouverture ou de fermeture similaire au mouvement de rotation mis en oeuvre avec un dispositif comparable de l'art antérieur pour réaliser une ouverture ou une fermeture. Un ressort de rappel interne au système permet de ramener le manche de la poignée de fermeture dans une position rapprochée de l'élément mobile à verrouiller ou libérer quand sa rotation atteint une position stable ouverte ou une position stable fermée pour qu'il y reste.

Le système fonctionne par la réalisation de deux liaisons rotules concentriques traversées par un axe de rotation. Cette combinaison de liaisons peut aussi permettre de dissocier le manche du reste de la poignée de fermeture, notamment du verrou d'engagement. Dans un tel cas, le verrou tourne lors de la rotation du manche de la poignée de fermeture autour de l'axe de rotation. La première rotule permet au manche le mouvement d'éloignement ergonomique qui désengage la sécurité et la deuxième rotule permet de maintenir mécaniquement le manche en lui autorisant deux mouvements de rotation.

Une version plus compacte encore pourrait être réalisée en plaquant le manche contre la carrosserie (ou similaire). Un appui dans la zone du ressort pourrait le dégager pour la préhension.

La présente divulgation propose une solution de poignée de fermeture pour carrosserie (ou autre) efficace, ergonomique, compacte et sécurisée. Dans le domaine des bennes ou plateaux pour véhicule utilitaire, elle permet la fabrication d'une ridelle équipée de sa poignée de fermeture dans une épaisseur totale de 50 mm, ce qui dans l'application des carrosseries de type benne ou plateau utilitaires procure une largeur utile de 2000 mm tout en restant sous la limite de 2100 mm de largeur totale avec une ridelle de chaque côté.

La présente divulgation ne se limite pas à l'exemple de réalisation décrit et illustré et aux variantes décrites ci-avant, seulement à titre d'exemple, mais elle englobe toutes les variantes que pourra envisager l'homme de l'art dans le cadre de la protection résultant des revendications annexées.

## Revendications

1. Poignée de fermeture (6) pour un ouvrant comportant un verrou (22 ; 122), un axe de rotation (16, 32 ; 116, 132) pour le verrou et un manche (28 ; 148, 150) permettant de commander la rotation du verrou (22 ; 122) autour de l'axe de rotation entre une position dite fermée et une position dite ouverte,
**caractérisée en ce qu'**elle comporte en outre une base (20 ; 120) supposée destinée à être fixe par rapport à l'ouvrant,
**en ce que** le manche (28 ; 148, 150) est en outre mobile en rotation autour d'un second axe perpendiculaire à l'axe de rotation, entre une position dite verrouillée et une position dite de libération,
**en ce que** le manche (28 ; 148, 150) et la base (20 ; 120) comportent un jeu de butées tel que lorsque le manche (28 ; 148, 150) est en position verrouillée et que le verrou (22 ; 122) est en position ouverte, respectivement fermée, une rotation du manche (28 ; 148, 150) autour de l'axe de rotation pour amener le verrou (22 ; 122) en direction de sa position fermée, respectivement ouverte, n'est pas possible,
**en ce que** ledit jeu de butées est tel que dans la position de libération la butée (54 ; 154) associée au manche (28 ; 148, 150) est décalée par rapport à la butée (36 ; 136) associée à la base (20 ; 120) autorisant alors une rotation du manche (28 ; 148, 150) autour de l'axe de rotation en entrainant le verrou (22 ; 122), et
**en ce que** le manche (28 ; 148, 150) est précontraint élastiquement dans sa position dite verrouillée.

2. Poignée de fermeture selon la revendication 1, **caractérisée en ce que** le verrou (122) et le manche (148, 150) sont d'une seule pièce (128).

3. Poignée de fermeture selon la revendication 2, **caractérisée en ce que** la base (120) présente une forme circulaire présentant à sa périphérie deux zones formant chacune un logement (164) en creux entre lesquelles se trouve une partie en saillie (136) formant butée, et **en ce que** le manche (148, 150) présente un doigt (154) en saillie vers la base (120), la forme dudit doigt (154) étant adaptée pour prendre place dans lesdits logements (164) en creux.

4. Poignée de fermeture (6) selon la revendication 1,
**caractérisée en ce que** le verrou (22) est monté sur la base (20) supposée fixe de manière à pouvoir tourner librement sur cette base (20) autour de l'axe de rotation, le verrou (22) étant positionné entre la base (20) et le manche (28),
**en ce que** la base (20) présente une première saillie (36) en direction du verrou (22) et du manche (28),
**en ce que** le manche (28) comporte une deuxième saillie (54) en direction de la base (20), le verrou (22) présentant une forme permettant à ladite deuxième saillie (54) de coopérer avec la première saillie (36),
**en ce que** le manche (28) est monté pivotant par rapport au verrou (22) selonle second axe,
**en ce que** dans la position verrouillée la deuxième saillie (54) vient en butée contre la première saillie (36) et dans la position dite position de libération la première saillie (36) ne vient pas empêcher un mouvement de rotation du manche (28) autour de l'axe de rotation.

5. Poignée de fermeture (6) selon la revendication 4, **caractérisée en ce que** le verrou (22) comporte :
- une partie centrale (40) avec un trou central permettant le passage de l'axe de rotation ainsi qu'une encoche périphérique (44) permettant à la deuxième saillie (54) du manche (28) de se déplacer lorsque le manche (28) pivote autour de son axe de pivotement, et
- un bras (42) en forme de crochet s'étendant à partir de la partie centrale (40).

6. Poignée de fermeture (6) selon l'une des revendications 4 ou 5, **caractérisée en ce que** le verrou (22) présente une première zone sphérique, et **en ce que** le manche (28) présente une seconde zone sphérique coopérant avec la première zone sphérique de manière à permettre le pivotement du manche (28) sur le verrou (22).

7. Poignée de fermeture (6) selon l'une des revendications 4 à 6, **caractérisée en ce que** le verrou (22) comporte une troisième saillie (46) et une quatrième saillie (46) s'étendant en direction de la platine (20), lesdites saillies (46) coopérant avec la première saillie (36) de manière à limiter le mouvement de rotation du verrou (22) par rapport à la platine (20) autour de l'axe de rotation.

8. Poignée de fermeture (6) selon l'une des revendications 4 à 7, **caractérisée en ce que** les moyens de rappel comportent un ressort (26) hélicoïdal prenant appui, d'une part, dans un logement (47) ménagé dans le verrou (22), faisant face au manche (28) et disposé de manière sensiblement diamétralement opposée à la forme du verrou destinée à laisser la deuxième saillie du manche coopérer avec la première saillie de la platine (20) par rapport à l'axe de rotation et, d'autre part, dans un logement (56) ménagé dans le manche (28) et disposé de manière sensiblement diamétralement opposée à la deuxième saillie (54) du manche (28) par rapport à l'axe de rotation.

9. Ridelle (2), **caractérisée en ce qu'**elle comporte au moins une poignée de fermeture (6) selon l'une des revendications 1 à 8.

10. Ridelle (2) selon la revendication 9, **caractérisée en ce qu'**elle comporte une partie profilée (8) montée entre deux pièces d'extrémité (10), chaque pièce d'extrémité (10) comportant une équerre avec une première branche (12) faisant face à une section d'extrémité de la partie profilée (8) et une seconde branche (14) destinée à servir de butée coopérant avec un poteau (4),
**en ce que** la première branche (12) comporte une lumière permettant le passage d'au moins une partie du verrou (22), et
**en ce que** la poignée de fermeture (6) est montée sur la partie profilée (8) de telle sorte que le verrou (22) puisse pivoter de manière qu'une partie du verrou (22) puisse passer à travers ladite lumière.

11. Ridelle selon l'une des revendications 9 ou 10, **caractérisée en ce que** la partie profilée (8) comporte au moins une zone sensiblement plane inclinée par rapport à la seconde branche (14) de l'équerre, **en ce que** la poignée de fermeture (6) est montée sur ladite zone sensiblement plane, et **en ce que** le manche (28), dans une position engagée, s'étend sensiblement parallèlement à la seconde branche (14) de l'équerre.

12. Pièce de carrosserie, de type benne ou plateau, **caractérisée en ce qu'**elle comporte une ridelle (2) selon l'une des revendications 9 à 11.

13. Véhicule, **caractérisé en ce qu'**il comporte une pièce de carrosserie selon la revendication 12.

## Patentansprüche

1. Verschlussgriff (6) für eine Klappe, umfassend einen Riegel (22; 122), eine Drehachse (16, 32; 116, 132) für den Riegel und einen Schaft (28; 148, 150), der es ermöglicht, die Drehung des Riegels (22; 122) um die Drehachse zwischen einer als geschlossen bezeichneten Stellung und einer als geöffnet bezeichneten Stellung zu steuern,
**dadurch gekennzeichnet, dass**
er ferner eine Basis (20; 120) umfasst, die dazu vorgesehen ist, in Bezug auf die Klappe fixiert zu sein,
dass der Schaft (28; 148, 150) ferner um eine zweite Achse senkrecht zu der Drehachse zwischen einer als verriegelt bezeichneten Stellung und einer als entriegelt bezeichneten Stellung drehbeweglich ist,
dass der Schaft (28; 148, 150) und die Basis (20; 120) einen Satz von Anschlägen derart umfassen, dass, wenn sich der Schaft (28; 148, 150) in der verriegelten Stellung befindet und sich der Riegel (22; 122) in der geöffneten bzw. geschlossenen Stellung befindet, eine Drehung des Schafts (28; 148, 150) um die Drehachse, um den Riegel (22; 122) in Richtung seiner geschlossenen bzw. geöffneten Stellung zu bringen, nicht möglich ist,
dass der Satz von Anschlägen derart ist, dass in der entriegelten Stellung der dem Schaft (28; 148, 150) zugeordnete Anschlag (54; 154) in Bezug auf den der Basis (20; 120) zugeordneten Anschlag (36; 136) versetzt ist, sodass er eine Drehung des Schafts (28; 148, 150) um die Drehachse zulässt, wobei der Riegel (22; 122) mitgeführt wird, und
dass der Schaft (28; 148, 150) in seiner als verriegelt bezeichneten Stellung elastisch vorgespannt ist.

2. Verschlussgriff nach Anspruch 1,
**dadurch gekennzeichnet, dass**
der Riegel (122) und der Schaft (148, 150) als ein einzelnes Stück (128) ausgebildet sind.

3. Verschlussgriff nach Anspruch 2,
**dadurch gekennzeichnet, dass**
die Basis (120) eine Kreisform aufweist, die in ihrem Umfang zwei Zonen aufweist, die jeweils eine eingelassene Aufnahme (164) bilden, zwischen denen sich ein vorstehender Abschnitt (136) befindet, der einen Anschlag bildet, und dass der Schaft (148, 150) einen zur Basis (120) hin vorstehenden Finger (154) aufweist, wobei die Form des Fingers (154) derart ausgelegt ist, dass er zwischen den eingelassenen Aufnahmen (164) Platz nimmt.

4. Verschlussgriff (6) nach Anspruch 1,
**dadurch gekennzeichnet, dass**
der Riegel (22) auf der Basis (20), die dazu vorgesehen ist, fixiert zu sein, derart angebracht ist, dass er sich frei auf dieser Basis (20) um die Drehachse drehen kann, wobei der Riegel (22) zwischen der Basis (20) und dem Schaft (28) positioniert ist,
dass die Basis (20) einen ersten Vorsprung (36) in Richtung des Riegels (22) und des Schafts (28) aufweist,
dass der Schaft (28) einen zweiten Vorsprung (54) in Richtung der Basis (20) umfasst, wobei der Riegel (22) eine Form aufweist, die es dem zweiten Vorsprung (54) ermöglicht, mit dem ersten Vorsprung (36) zusammenzuwirken,
dass der Schaft (28) in Bezug auf den Riegel (22) gemäß der zweiten Achse schwenkbar angebracht ist,
dass in der verriegelten Stellung der zweite Vorsprung (54) an dem ersten Vorsprung (36) anliegt und in der als entriegelte Stellung bezeichneten Stellung der erste Vorsprung (36) eine Drehbewegung des Schafts (28) um die Drehachse nicht behindert.

5. Verschlussgriff (6) nach Anspruch 4,
**dadurch gekennzeichnet, dass**
der Riegel (22) Folgendes umfasst:
- einen mittleren Abschnitt (40) mit einem mittleren Loch, das den Durchgang der Drehachse ermöglicht, sowie einer Umfangsnut (44), die es dem zweiten Vorsprung (54) des Schafts (28) ermöglicht, sich zu verschieben, wenn der Schaft (28) um seine Schwenkachse schwenkt, und
- einen hakenförmigen Arm (42), der sich von dem mittleren Abschnitt (40) aus erstreckt.

6. Verschlussgriff (6) nach einem der Ansprüche 4 oder 5,
**dadurch gekennzeichnet, dass**
der Riegel (22) einen ersten kugelförmigen Bereich aufweist und dass der Schaft (28) einen zweiten kugelförmigen Bereich aufweist, der mit dem ersten kugelförmigen Bereich derart zusammenwirkt, dass die Schwenkung des Schafts (28) an dem Riegel (22) ermöglicht wird.

7. Verschlussgriff (6) nach einem der Ansprüche 4 bis 6,
**dadurch gekennzeichnet, dass**
der Riegel (22) einen dritten Vorsprung (46) und einen vierten Vorsprung (46) umfasst, die sich in Richtung der Platte (20) erstrecken, wobei die Vorsprünge (46) mit dem ersten Vorsprung (36) derart zusammenwirken, dass sie die Drehbewegung des Riegels (22) in Bezug auf die Platte (20) um die Drehachse begrenzen.

8. Verschlussgriff (6) nach einem der Ansprüche 4 bis 7,
**dadurch gekennzeichnet, dass**
die Rückstellmittel eine Schraubenfeder (26) umfassen, die einerseits in einer in dem Riegel (22) ausgebildeten Aufnahme (47), die dem Schaft (28) zugewandt ist und im Wesentlichen diametral entgegengesetzt zu der Form des Riegels angeordnet ist, die dazu vorgesehen ist, den zweiten Vorsprung des Schafts mit dem ersten Vorsprung der Platte (20) in Bezug auf die Drehachse zusammenwirken zu lassen, und andererseits in einer in dem Schaft (28) ausgebildeten Aufnahme (56), die im Wesentlichen diametral entgegengesetzt zu dem zweiten Vorsprung (54) des Schafts (28) in Bezug auf die Drehachse angeordnet ist, aufliegt.

9. Seitenwand (2),
**dadurch gekennzeichnet, dass**
sie mindestens einen Verschlussgriff (6) nach einem der Ansprüche 1 bis 8 umfasst.

10. Seitenwand (2) nach Anspruch 9,
**dadurch gekennzeichnet, dass**
sie einen profilierten Abschnitt (8) umfasst, der zwischen zwei Endstücken (10) angebracht ist, wobei jedes Endstück (10) einen Winkel mit einem ersten Schenkel (12), der einem Endstück des profilierten Abschnitts (8) zugewandt ist, und einem zweiten Schenkel (14), der dazu vorgesehen ist, als mit einer Stange (4) zusammenwirkender Anschlag zu dienen, umfasst,
dass der erste Schenkel (12) eine Öffnung umfasst, die den Durchgang mindestens eines Abschnitts des Riegels (22) ermöglicht, und
dass der Verschlussgriff (6) auf dem profilierten Abschnitt (8) derart angebracht ist, dass der Riegel (22) derart schwenken kann, dass ein Abschnitt des Riegels (22) durch die Öffnung hindurchtreten kann.

11. Seitenwand nach einem der Ansprüche 9 oder 10,
**dadurch gekennzeichnet, dass**
der profilierte Abschnitt (8) mindestens einen im Wesentlichen ebenen Bereich umfasst, der in Bezug auf den zweiten Schenkel (14) des Winkels geneigt ist, dass der Verschlussgriff (6) auf dem im Wesentlichen ebenen Bereich angebracht ist und dass sich der Schaft (28) in einer in Eingriff gebrachten Stellung im Wesentlichen parallel zu dem zweiten Schenkel (14) des Winkels erstreckt.

12. Karosserieteil vom Kipper- oder Ladeflächentyp,
**dadurch gekennzeichnet, dass**
es eine Seitenwand (2) nach einem der Ansprüche 9 bis 11 umfasst.

13. Fahrzeug,
**dadurch gekennzeichnet, dass**
es ein Karosserieteil nach Anspruch 12 umfasst.

## Claims

1. A closing handle (6) for an opening frame including a lock (22; 122), an axis of rotation (16, 32; 116, 132) for the lock and a sleeve (28; 148, 150) allowing to control the rotation of the lock (22; 122) around the axis of rotation between a position called closed position and a position called open position,
**characterised in that** it further includes a base (20; 120) supposed to be fixed relative to the opening frame,
**in that** the sleeve (28; 148, 150) is further movable in rotation around a second axis perpendicular to the axis of rotation, between a position called locked position and a position called release position,
**in that** the sleeve (28; 148, 150) and the base (20; 120) include a set of stops such that when the sleeve (28; 148, 150) is in the locked position and the lock (22; 122) is in the open, respectively closed position, rotation of the sleeve (28; 148, 150) around the axis of rotation to bring the lock (22; 122) towards its closed, respectively open position, is not possible,
**in that** said set of stops is such that in the release position the stop (54; 154) associated with the sleeve (28; 148, 150) is offset relative to the stop (36; 136) associated with the base (20; 120) then allowing rotation of the sleeve (28; 148, 150) around the axis of rotation by driving the lock (22; 122), and **in that** the sleeve (28; 148, 150) is elastically pre-stressed in its position called locked position.

2. The closing handle according to claim 1, **characterised in that** the lock (122) and the sleeve (148, 150) are made in one piece (128).

3. The closing handle according to claim 2, **characterised in that** the base (120) has a circular shape having at its periphery two areas each forming a hollow housing (164) between which there is a projecting portion (136) forming stop, and **in that** the sleeve (148, 150) has a finger (154) projecting towards the base (120), the shape of said finger (154) being adapted to take place in said hollow housings (164).

4. The closing handle (6) according to claim 1, **characterised in that** the lock (22) is mounted on the base (20) supposedly fixed so as to be able to rotate freely on this base (20) around the axis of rotation, the lock (22) being positioned between the base (20) and the sleeve (28),
**in that** the base (20) has a first projection (36) towards the lock (22) and the sleeve (28),
**in that** the sleeve (28) includes a second projection (54) towards the base (20), the lock (22) having a shape allowing said second projection (54) to cooperate with the first projection (36),
**in that** the sleeve (28) is pivotally mounted relative to the lock (22) along the second axis,
**in that** in the locked position the second projection (54) abuts against the first projection (36) and in the position called release position the first projection (36) does not prevent a rotational movement of the sleeve (28) around the axis of rotation.

5. The closing handle (6) according to claim 4, **characterised in that** the lock (22) includes:
- a central portion (40) with a central hole allowing the passage of the axis of rotation as well as a peripheral notch (44) allowing the second projection (54) of the sleeve (28) to move when the sleeve (28) pivots around its pivot axis, and
- a hook-shaped arm (42) extending from the central portion (40).

6. The closing handle (6) according to one of claims 4 or 5, **characterised in that** the lock (22) has a first spherical area, and **in that** the sleeve (28) has a second spherical area cooperating with the first spherical area so as to allow the sleeve (28) to pivot on the lock (22).

7. The closing handle (6) according to one of claims 4 to 6, **characterised in that** the lock (22) includes a third projection (46) and a fourth projection (46) extending in the direction of the plate (20), said projections (46) cooperating with the first projection (36) so as to limit the rotational movement of the lock (22) relative to the plate (20) around the axis of rotation.

8. The closing handle (6) according to one of claims 4 to 7, **characterised in that** the return means include a helical spring (26) bearing, on the one hand, in a housing (47) provided in the lock (22), facing the sleeve (28) and disposed substantially diametrically opposite to the shape of the lock intended to let the second projection of the sleeve cooperate with the first projection of the plate (20) relative to the axis of rotation and, on the other hand, in a housing (56) provided in the sleeve (28) and disposed substantially diametrically opposite to the second projection (54) of the sleeve (28) relative to the axis of rotation.

9. A side panel (2), **characterised in that** it includes at least one closing handle (6) according to one of claims 1 to 8.

10. The side panel (2) according to claim 9, **characterised in that** it includes a profiled portion (8) mounted between two end pieces (10), each end piece (10) including a bracket with a first branch (12) facing an end section of the profiled portion (8) and a second branch (14) intended to be used as a stop cooperating with a post (4),
**in that** the first branch (12) includes an aperture allowing the passage of at least part of the lock (22), and
**in that** the closing handle (6) is mounted on the profiled portion (8) such that the lock (22) can pivot so that part of the lock (22) can pass through said opening.

11. The side panel according to one of claims 9 or 10, **characterised in that** the profiled portion (8) includes at least one substantially flat area inclined relative to the second branch (14) of the bracket, **in that** the closing handle (6) is mounted on said substantially flat area, and **in that** the sleeve (28), in an engaged position, extends substantially parallel to the second branch (14) of the bracket.

12. A bodywork part, of the tipper or tray type, **characterised in that** it includes a side panel (2) according to one of claims 9 to 11.

13. A vehicle, **characterised in that** it includes a bodywork part according to claim 12.
